# EUROPEAN PATENT APPLICATION

(11) **EP 1 378 175 A1**
(43) Date of publication of application: **07.01.2004**
(21) Application number: 02077622.5
(22) Date of filing: 02.07.2002
(51) Int. Cl.: A23G 7/00

(54) **Apparatus for making chocolate flakes**

(71) Applicant: AASTED-MIKROVERK APS, 3520 Farum (DK)
(72) Inventor: Haslund, Henning, 4632 Bjaeverskov (DK)
(74) Representative: Heiden, Finn

(57) **Abstract**

Apparatus (1) for making chocolate flakes (16) comprising a rotating drum (2) arranged at an essentially horizontal axis (4) and having a peripheral surface (7) for carrying a solidifying chocolate layer (8). A chocolate tray (6) is arranged for depositing liquid chocolate on to the peripheral surface (7) of the drum (2). Plough means (9) is arranged at the peripheral surface (7) for cutting up the created chocolate layer on the revolving drum into stripes. Knife means (13) is adapted to be moved forth and back transversely over the peripheral surface (7) of the drum cutting through the solidifying chocolate stripes. The obtained chocolate flakes (16) are uniform in size and shape.

## Description

The present invention concerns an apparatus for making chocolate flakes. Chocolate flakes are widely used as taste-full decoration upon ice-cream, bakery-articles, confectionery articles such as chocolate articles or upon coffee or other beverages such as milky drinks, etc. Another widespread use is when chocolate flakes are mixed into masses of ice-cream, or into bakery articles.

Generally, chocolate masses are suspensions of non-fat particles such as sugar, milk powders and cocoa solids mixed up with a liquid fat constituent. Often the fat phase comprises genuine cocoa butter of until around 30%, but may comprise substitutes as well. Such substitutes can be in the form of other types of fat-containing oils. Chocolate types where the cocoa butter has been replaced wholly or partly by other fats are often named commercially as compound chocolate, in which the cocoa butter has been replaced by palm-kernel oil. Mass made of 100% fat in the form of cocoa butter or the like as compound is also possible.

However, for the chocolate-like masses it is decisive, that whether the fat phase constitutes of genuine cocoa butter or substitutes therefore, that the fat phase is capable of crystallizing into stable crystal types, such as the β-crystals developing in genuine cocoa butter when the mass solidifies.

Before being supplied in liquid state to the chocolate tray of the inventive apparatus the chocolate is typically being treated for providing stable beta-V crystals at solidification. The treatment could be a tempering process by which the mass is generally brought to around 40-50°C, where after it is being cooled to around 25-34°C so that crystallisation is initiated. Then the mass is reheated around 0,5-2,0°C for re-melting most of the in-stable crystals in the mass, however preserving a content of stable βV-crystals which melts at a higher temperature than the in-stable crystals. The stable crystals are preserved in the mass ready for depositing in an amount of typically 0,01% - 5%, preferably in an amount of 0,1% - 2%. Before being supplied to the tray the chocolate could also be treated by other processes such as cooling the chocolate to around 30-34°C, then seeding it with already made powder having a content of desirable beta V crystals for ensuring the solidification into proper crystals.

By a traditional method of making chocolate flakes, a curtain of tempered chocolate is deposited upon a running conveyor belt. The chocolate is spread in a layer on the belt having a thickness of less than 2,5 mm. When solidified, the layer is randomly broken into pieces by the layer is caused to drop down from the belt into a container. The chocolate flakes made so varies extensively in shape as well as in actual size and may be as small as a few square millimetre and as great as several square centimetres.

The apparatus for making chocolate flakes according to the present invention is essential in that it comprises a rotating drum with a peripheral surface for carrying a solidifying chocolate layer, a chocolate tray arranged for depositing liquid chocolate on to the peripheral surface of the drum, plough means arranged at the peripheral surface for cutting up the created chocolate layer on the revolving drum into stripes, as well as comprising knife means adapted to be moved transversely over the peripheral surface of the drum cutting through the solidifying chocolate layer.

The liquid chocolate is distributed in a uniform layer when deposited unto the peripheral surface of the revolving drum. The layer is then being cut into stripes with the desired width determined by the plough means. Thereafter, the chocolate stripes are cut transversely by the moving knife means into flakes of the same size. The final size of the flakes are then determined by the relation between the revolving speed of the drum and the velocity of the transversely moving knife. Thereafter the flakes leaves the drum periphery.

The chocolate flakes obtained are uniform in shape and size. Furthermore, the shape and size may be predetermined exactly to fit a desired use.

If greater size of the flakes is desired, for example to be suspended into ice-cream, the width of the chocolate stripes is adjusted by the plough means or the transversely moving knife is caused to move slower or both. If flakes with a smaller size is desired, for example to be used as decoration upon ice-cream or upon bakery or chocolate articles as pralines, the width of the stripes is made shorter and the transversely moving cutting knife is caused to move faster. The mutual relationship between the actually chosen width of the stripes and the moving velocity of the knife may also be changed for obtaining differently sized and shaped chocolate flakes. If long and small "pin-like" flakes are desired the width of the stripes could be made very small, for example to around 3mm and the velocity of the transversely moving knife is lowered so that the chocolate stripes made by the plough means are cut at an approximately length of for example 10-15 mm.

The drum is advantageously rotated by a motor with a variable rotating speed so that the above described adjustments can be achieved at any time.

The shape of the flakes could also be made more parallelogram-like than rectangulary by moving the cutting knife transversely with an inclined angle to the rotation axis of the drum.

By one embodiment the plough means comprises a rake having teeth immersed into the chocolate layer on the peripheral surface of the drum. The distance between the individual teeth determines the width of the stripes made at the drum. The size of the flakes made could be changed just by using rakes with different width between the teeth. If larger flakes is desired, a rake having a larger width such as 5-10 mm between the teeth is used, and if smaller flakes is to be made the rake is substituted with one having a smaller width such as 1-5 mm between the teeth.

By another embodiment the plough means comprises a number of disc-shaped ploughshares arranged on a shaft. The shaft with the ploughshares is influenced to a counter-wise rotation by the revolving drum and the shearing forces exerted from the chocolate to the immersed ploughshares, which then easily cuts through the chocolate layer making the desired stripes. Especially when the drum is cooled for achieving a faster solidification of the chocolate layer the shaft with the disc-shaped ploughshares is advantageous. The chocolate layer is then not "soft" and easy to cut as when the drum is not being cooled, and instead the layer becomes more hard and "brittle", especially when a forced cooling to lower temperatures such as below 10°C is applied. Due to the rotating character of the ploughshares they simply just cuts in over and through the solidifying chocolate layer even if it is quite close to being fully solidified and even then making clean and clear cuts of the layer into stripes without ripping up the layer or making fractures in the layer as otherwise experienced with non-rotating means.

When arranging the knife means as a disc-shaped knife arranged to be rolling forth and back transversely over the peripheral surface of the drum cutting through the solidifying chocolate layer, a clean and sharp cut is obtained essentially without any adherence of the chocolate to the knife means. This also applies when the drum is cooled and the chocolate stripes have become nearly fully solidified.

Advantageously, a stationery scraper is arranged extending transversely over the periphery of the drum for scraping off the flaked chocolate from the drum periphery directly on to an underlying conveyor or container means. The scraper is typically inclined to the peripheral surface.

Cooling means may be arranged for cooling the peripheral surface of the drum. The diameter of the drum is thereby reduced as the chocolate stripes solidifies fast and quickly to a "leather-like" condition or whar condition may be desired.

The further cooling of the cut chocolate flakes at the drum periphery to a more or less "brittle" state, at least at the surfaces of the flakes still laying on to the drum periphery, removes any sticking thereto, so that the adherence of the flakes is reduced to a minimum before meeting the scraper. It is then especially easy for the scraper to remove the chocolate flakes from the drum periphery. The flakes simply pops off when being pushed.

By an embodiment the cooling means comprises a container with liquid connected with the inner of the drum for flowing cooled liquid therethrough.

A transportation belt is advantageously arranged directly below the drum for catching up the chocolate flakes scraped off.

The apparatus according to the invention is explained in further detail below by reference to preferred embodiments as well as the drawing, in which
fig. 1 is a schematical, perspective view of the apparatus for making chocolate flakes according to the invention,
fig. 2 is a detailed view of a first embodiment of the plough means of the apparatus comprising a rake immersed into the chocolate covering for parting it into stripes,
fig. 3 is a detailed view of another embodiment of the plough means comprising a number of disc-shaped ploughshares arranged on a shaft, and
fig. 4 is a further detailed view of the disc-shaped knife means cutting the stripes into the final chocolate flakes.

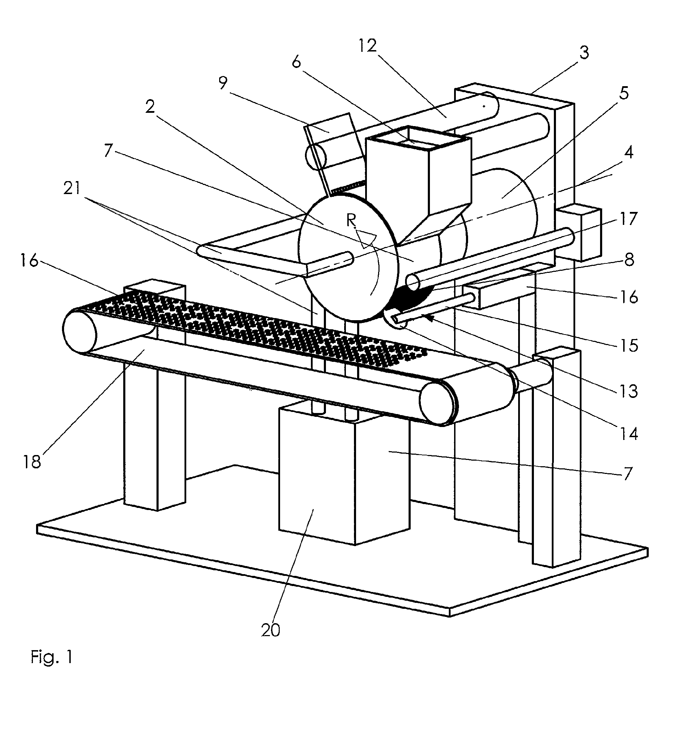

The apparatus 1 disclosed in figure 1 comprises a rotating drum 2 arranged at a support 3 to be turned around an essentially horizontal axis 4 by an electrical motor 5. A chocolate tray 6 is arranged close to the peripheral surface 7 of the drum 2 for depositing liquid chocolate continuously on to the peripheral surface 7. A solidifying chocolate layer 8 is thereby created at the peripheral surface 7.

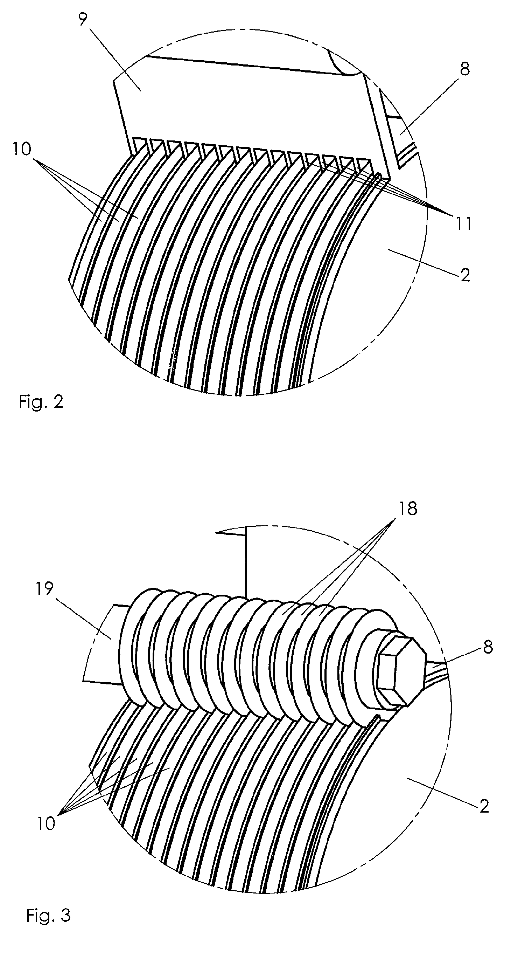

Plough means 9 is arranged at a position after the chocolate is deposited on to the peripheral surface 7, seen in the direction of rotation of the drum 2 depicted by the arrow R. The plough means 9 is cutting up the chocolate layer 8 into stripes 10 as depicted in figure 2. The plough means disclosed in figure 1 and 2 consists of a rake 9 having a row of teeth 11. The rake 9 is fixed to the support 3 by a horizontal rod 12. The peripheral position of the rake on the drum surface 7 may typically be adjusted. The width between the individual teeth 11 determines the width of the chocolate stripes 10. When substituting the rake 9 with another one having another width between the teeth, then the width of the stripes is changed accordingly and the size of the chocolate flakes made is altered as well.

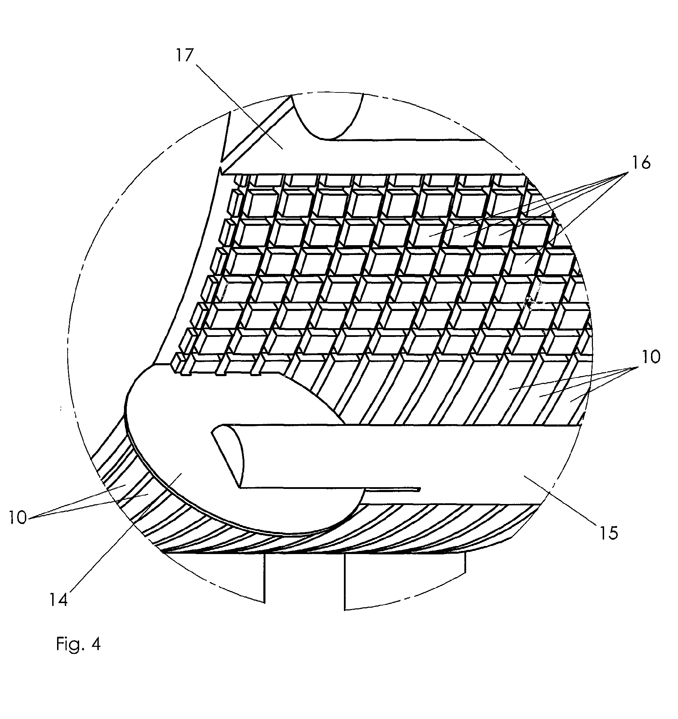

Knife means 13 is arranged at an even further distant position from the depositing tray 6 being connected to the support 3 as disclosed in figure 4. The knife means 13 advantageously comprises a disc-shaped knife 14 arranged to be rolling forth and back transversely over the peripheral surface 7 of the drum 2. The disc-shaped knife 14 is carried by the end of a piston rod 15 of a pneumatically activated piston 16 being connected to the support 3. When the piston is activated to move in and out with a certain frequency the disc-shaped knife 14 moves transversely with the same frequency cutting through the solidifying chocolate stripes 10. Thereby is created numerous uniform chocolate flakes 16 on the peripheral surface 7 of the drum 2.

The size and shape of the chocolate flakes 16 is easily altered by having the disc-shaped knife 14 moving faster or slower over the peripheral surface 7 or by changing the speed of revolution of the drum 2 controlled by the motor 5.

At the final peripheral position is arranged a scraper 17 as depicted in figure 1 and 4. The scraper 17 is typically plate-shaped and extends over the peripheral surface 7 scraping of the chocolate flakes 16 from the peripheral surface. The flakes drops down on to a conveyor belt 18 and is transported on to a non-disclosed packing station or manufacturing station to be dropped directly on to edible articles or to be mixed into ice-cream or other edible masses.

By another embodiment the plough means comprises a number of disc-shaped ploughshares 18 arranged on a shaft 19, which is arranged so that it is free to rotate. The shaft 19 with the ploughshares 18 then rotates due to interacting with the shearing forces exerted from the chocolate to the immersed ploughshares 18. The ploughshares may contact the peripheral surface 7. The ploughshares 18 easily cuts through the chocolate layer 8 making the desired stripes 10.

Especially when the drum 2 is cooled for achieving a faster solidification of the chocolate layer the shaft 19 with the disc-shaped ploughshares 18 is advantageous. The chocolate layer 8 is then not so "soft" and easy to cut as when the drum is not cooled and instead becomes more hard and "brittle", especially when a forced cooling to temperatures such as below 20°C is applied. Such more or less solidified and therefore brittle chocolate layer, which is no longer in a soft leather-like state is impossible to cot through with a stationery knife without fracturing the chocolate completely uncontrolled.

Due to the rotating character of the ploughshares 18 they simply just rolls and cuts in over and through the solidifying chocolate layer 8. Even if the layer is close to being fully solidified the ploughshares effectively cuts through it. Clean and clear cuts of the layer 8 into stripes 10 without ripping up the layer 8 or making fractures in the layer 8 is the result.

A circulation system for cooling liquid is arranged comprising a reservoir 20 with an internal pump which is controlled to flow liquid through the inner of the drum 2 by hoses 21 creating connection between the drum 2 and the reservoir 20.

The whole apparatus may also be arranged in an environment in which the atmosphere may be controlled. Especially the temperature of the air surrounding the drum may be important to control accurately. The air may be cooled for cooling the peripheral surface of the drum for achieving a faster solidification of the chocolate layer or simply for having certain chocolate types solidifying. Such chocolate types may be chocolate having lower melting temperatures such as around 25-26°C, which would otherwise not solidify properly at the peripheral drum surface when the surrounding air has normal factory temperatures of 20-25°C.

The environment around the peripheral drum surface may also be controlled to such extent, that the dewpoint temperature of the air is lower than the surface temperature of the peripheral drum surface. Thereby creation of dew at the peripheral drum surface is avoided.

A drum having a diameter of 1000 mm was successfully run with a temperature of the circulating cooling liquid of 6°C. In that case the ploughshares were used to finally cut the chocolate stripes into the desired uniform flakes 16 without deterioration of the chocolate layer.

## Claims

1. Apparatus (1) for making chocolate flakes (16) comprising a rotating drum (2) with a peripheral surface (7) for carrying a solidifying chocolate layer (8), a chocolate tray (6) arranged for depositing liquid chocolate on to the peripheral surface (7) of the drum (2), plough means (9, 18) arranged at the peripheral surface (7) for cutting up the created chocolate layer (8) on the revolving drum (2) into stripes (10), as well as comprising knife means (13) adapted to be moved transversely over the peripheral surface (7) of the drum (2) cutting through the solidifying chocolate stripes (10).

2. Apparatus according to claim 1, wherein the plough means comprises a rake (9) having teeth (11) immersed into the chocolate layer (8) on the peripheral surface (7) of the drum (2).

3. Apparatus according to claim 1, wherein the plough means comprises a number of disc-shaped ploughshares (18) arranged on a shaft (19).

4. Apparatus according to claim 1, wherein the knife means comprises a disc-shaped knife (14) arranged to be rolling forth and back transversely over the peripheral surface (7) of the drum (2) cutting through the solidifying chocolate layer (8).

5. Apparatus according to claim 1, wherein a stationery scraper (9) is arranged extending transversely over the peripheral surface (7) of the drum (2) for scraping off the flaked chocolate from the drum periphery.

6. Apparatus according to claim 1, wherein cooling means (20) is arranged for cooling the peripheral surface (7) of the drum.

7. Apparatus according to claim 1, wherein the cooling means (20) comprises a container with liquid connected with the inner of the drum for flowing cooled liquid therethrough.

8. Apparatus according to claim 1, wherein a transportation belt (18) is arranged below the drum (2) for catching up the chocolate flakes (16) scraped off.

9. Apparatus according to claim 1, wherein the drum (2) is rotated by a motor (5) with an adjustable speed.
